Europäisches Patentamt

(19) European Patent Office

Office européen des brevets

(11) Publication number : **0 335 668 B1**

(12) **EUROPEAN PATENT SPECIFICATION**

(45) Date of publication of patent specification :
05.08.92 Bulletin 92/32

(51) Int. Cl.$^5$ : **C01B 3/44,** C01B 3/40

(21) Application number : **89303063.5**

(22) Date of filing : **28.03.89**

(54) **Method and catalyst for synthesis gas preparation.**

(30) Priority : **28.03.88 US 174174**

(43) Date of publication of application :
**04.10.89 Bulletin 89/40**

(45) Publication of the grant of the patent :
**05.08.92 Bulletin 92/32**

(84) Designated Contracting States :
**DE GB NL**

(56) References cited :
**EP-A- 0 164 864**
**DE-A- 1 808 911**

(72) Inventor : **Eberly, Paul Earl, Jr.**
**9440 Ventura Drive**
**Baton Rouge Louisiana 70815 (US)**
Inventor : **Goetsch, Duane Arlen**
**715 Finchley Avenue**
**Baton Rouge Louisiana 70806 (US)**
Inventor : **Say, Geoffrey Rhys**
**3020 Tall Timbers Road**
**Baton Rouge Louisiana 70815 (US)**
Inventor : **Vargas, Jose Manuel**
**8250 Gladewood Drive**
**Baton Rouge Louisiana 70806 (US)**

(74) Representative : **Somers, Harold Arnold et al**
**ESSO Engineering (Europe) Ltd. Patents &**
**Licences Mailpoint 72 Esso House Ermyn Way**
**Leatherhead, Surrey KT22 8XE (GB)**

(73) Proprietor : **EXXON RESEARCH AND**
**ENGINEERING COMPANY**
**P.O.Box 390, 180 Park Avenue**
**Florham Park, New Jersey 07932 (US)**

## Description

### Field of the Invention

This invention relates to a fluid bed process for preparing synthesis gas, carbon monoxide and hydrogen, and a catalyst useful therein. More particularly, this invention relates to a catalytic process wherein a light hydrocarbon, primarily methane, is converted to synthesis gas and the catalyst used therein substantially preserves the methane conversion when the product synthesis gas is cooled. More particularly, the catalyst used in preparing the synthesis gas is such that the back reaction of carbon monoxide and hydrogen to form methane during the cooling step is substantially eliminated.

### Background and Prior Art

The production of synthesis gas by either partial oxidation or steam reforming is well known and there are extensive literature references to these processes. Each process may be used separately to produce synthesis gas or the processes may be combined.

The steam reforming reaction is highly endothermic and is described as:

$$CH_4 + H_2O \rightleftarrows CO + 3 H_2 \qquad (1)$$

The partial oxidation reaction is highly exothermic and is described as:

$$CH_4 + O_2 \rightarrow CO + H_2 + H_2O \qquad (2)$$

The combination of the two reactions is somewhat exothermic and is described as:

$$2 CH_4 + O_2 \rightarrow 2 CO + 4H_2 \qquad (5)$$

In addition to these to primary reactions, the water gas shift reaction also occurs:

$$CO + H_2O \rightleftarrows H_2 + CO_2 \qquad (6)$$

The equation for the combined process shows that the ratio of produced hydrogen to carbon monoxide is 2/1. This ratio is convenient for utilizing the synthesis gas in the production of higher molecular weight hydrocarbons through the Fischer-Tropsch reaction. The ratio of $H_2/CO$ can be varied by changing the mole ratios of $CH_4/H_2O/O_2/CO_2$ and by changing reactor temperature and pressure.

Patents illustrating the related processes are: GB-A 637,776; 1,359,877 and 2,119, 276: US-A 3,976,504; 3,984,210; 4,048,091; 4,414,140; 4,415,484; 2,425,754; 2,541,657; 2,577,563; 2,607,670; 2,631,094; 2,665,199; 3,168;386; 3,355,248, 3,379,504; 3,573,224; 3,644,100; 3,738,291; 3,953,356; and 4,309,198; and Japanese 580,910,022. Patents illustrative of the reaction between methane, steam and oxygen over a nickel catalyst are: US-A 1,711,036; 3,138,438; 2,467,966; 1,736,065; and 1,960,912. These latter patents show the reaction occurring either in a fixed bed of catalyst or in a fluid catalyst bed.

Catalysts comprising nickel on alumina are well known, c.f. G. W. Bridger "Catalysis", The Steam Reforming of Hydrocarbons p. 39. One conclusion of this reference is that increasing amounts of nickel up to about 20 wt.% nickel increases the activity of the nickel/alumina catalyst and nickel levels for steam reforming catalyst are reported, generally, as ranging from about 8 wt.% to 20 wt.% of catalyst.

Fluid bed processes are well known for the advantages they provide in heat transfer and mass transfer. Fluidized beds allow for substantially isothermal reactor conditions and are effective in eliminating temperature runaways or hot spots. Such processes are not without their disadvantages and the use of fluidized systems must take into consideration the strength of the catalyst (its resistance to attrition) as well as the erosivity of the catalyst (the tendency of the catalyst to erode equipment).

The production of synthesis gas in fluid bed processes is particularly sensitive to catalyst strength. If the catalyst undergoes severe attrition in which fine catalyst particles are formed, these fine particles will be entrained in the product gas and carried through and out of the fluid bed regardless of whether cyclones are employed for fines recovery. This not only causes high catalyst make-up rates, but also causes downstream fouling and other associated problems which are further described below.

Methane conversion to synthesis gas is affected deleteriously by catalyst attrition because (i) particles are lost from the fluid bed system as fines, thereby decreasing the volumetric activity of the fluid bed of catalyst and requiring that fresh catalyst be added in order to maintain acceptable levels of methane conversion, and (ii) catalyst fines entrained in the product gas and carried out of the fluid bed tend to deposit on equipment outside the fluid bed and (because equation (1) above is reversible) methane can be re-formed as the temperature is decreased and a new reaction equilibrium is established. In either case, the net conversion of methane is decreased. Relatively high residual methane in the synthesis gas can cause a substantial economic debit when the synthesis gas is used, for example, in Fischer-Tropsch processes.

The object of this invention is not only to provide a catalytic, fluid bed, hydrocarbon conversion process that minimizes the necessity of adding catalyst to the fluid bed to maintain volumetric activity, but more importantly, to minimize the methane concentration in the cooled recovered gases by minimizing the amount of catalytic material, carried out of the bed, thereby minimizing the back reaction of carbon monoxide and hydrogen to form methane.

## Summary of the Invention:

Synthesis gas is produced by converting a light hydrocarbon feed, primarily comprised of methane, in a reaction zone wherein a catalyst comprised of nickel and support primarily on alpha alumina is maintained in a fluidized bed at elevated temperatures and the feed is reacted with steam and hydrocarbon. The product synthesis gas comprises carbon monoxide and hydrogen and fine catalyst particles that are entrained in the product gas. The product gas is cooled in a second zone to a temperature below that which favors the re-formation of methane from carbon monoxide and hydrogen. The net conversion of methane, that is, the methane converted in the reaction zone less the methane re-formed in the cooling zone is preserved by minimizing the loss of nickel from the reaction zone which is accomplished by utilizing an attrition resistant catalyst to minimize catalyst losses from the reaction zone through loss of fine catalyst particles and maintaining the nickel content of the catalyst such that at least about 90% of the methane converted is preserved as synthesis gas after the cooling step.

This combination of features minimizes the amount of nickel lost as catalyst from the fluid bed as fines which are the result of the catalyst attrition in the fluid bed and minimizes the ability of the fines that are deposited in down stream lines from promoting the back reaction of carbon monoxide and hydrogen to form methane while the product carbon monoxide and hydrogen are cooled from reaction temperatures.

## Description of the Drawings:

Figure 1 is a schematic of the synthesis gas production process.

Figure 2 is a plot of the performance of a fluid bed reactor operating with a catalyst having poor attrition resistance.

Figure 3 is a plot of the performance of a fluid bed reactor operating with a catalyst having the preferred attrition resistance.

Figure 4 is a plot of attrition versus catalyst particle density.

Figure 5 is a plot of activity versus wt.% Ni on an alpha alumina catalyst having acceptable attrition resistance.

## Detailed Description of the Invention:

The production of synthesis gas by this invention is carried out at conditions of elevated temperatures and pressures that favor the formation of hydrogen and carbon monoxide when, for example, methane is reacted with oxygen and steam. Temperatures are usually in excess of about 1700°F but not so high as to cause disintegration of the catalyst or the sticking of catalyst particles together. Preferably, temperatures range from about 1750°F to about 1950°F, more preferably, about 1800° to 1850°F. Pressure may range from atmospheric to about 40 atmospheres. Where the ratio of hydrogen to carbon monoxide in the synthesis gas becomes important and where, for example, the synthesis gas will be used in a Fischer-Tropsch type process, higher pressures are preferred, that is, about 20-30 atmospheres, which allows the subsequent process to proceed without intermediate compression of product gases.

Methane, steam, and oxygen are introduced into the fluid bed by various techniques which include means to prevent burning of the methane prior to introduction into the fluidized catalyst bed. This may be accomplished by separately injecting the methane and oxygen into the bed or by diluting each stream with steam as it enters the bed. Preferably, methane and steam are pre-mixed in a molar ratio of about 1 to 3, respectively, and more preferably 1.5 to 2.5 and are injected into the bed. The molar ratio of oxygen to methane is about 0.2 to 1.0, preferably 0.4 to 0.6.

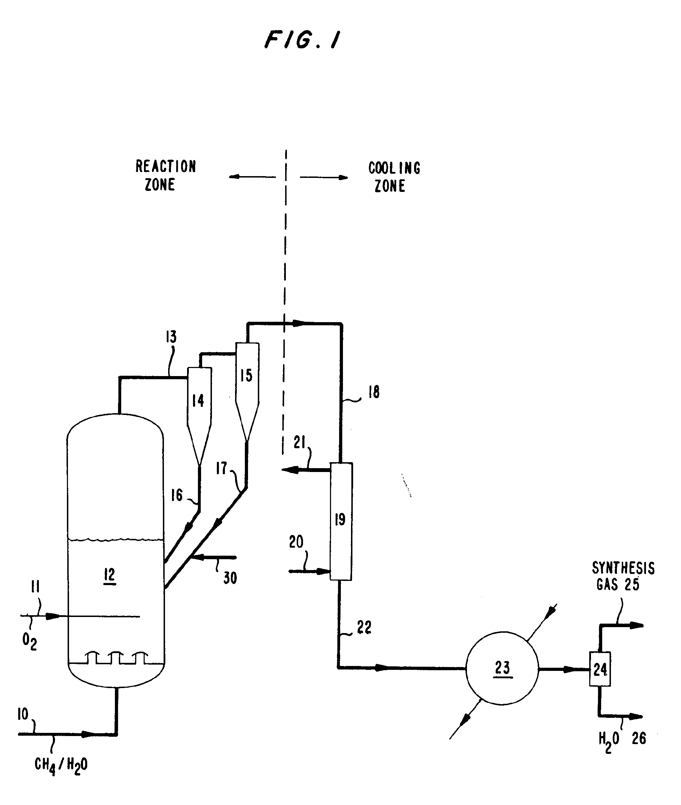

Referring now to Figure 1 for the process flow scheme, methane and steam are pre-mixed in line 10 and enter the fluid bed reactor 12 where, e.g., a 1 wt.% nickel on alumina catalyst is maintained in a fluidized state. Oxygen is separately injected into reactor 12 through line 11. The overhead product gases in line 13 include hydrogen, carbon monoxide, unconverted methane, some steam and lesser amounts of carbon dioxide along with entrained catalyst in the form of catalyst particles that have escaped the fluid bed as catalyst fines. Cyclones 14 and 15 trap catalyst particles and some fines and return these to the fluid bed via diplegs 16 and 17. Make up catalyst, that is, fresh catalyst added to account for catalyst lost as fines, can be added through either one of the diplegs as shown by line 30. The number and placement of cyclones is optional. A primary cyclone may be used along with a secondary and even a tertiary cyclone. The cyclones can be placed within the reactor vessel or external to the vessel. These options are not shown and are at the designers discretion. The important point is that regardless of the number or placement of the cyclones, some fines will escape by virtue of entrainment in the product gases and deposit in line 18 and in the waste heat boiler 19 where water enters through line 20 and leaves as steam through line 21. The cooling provided by the boiling water quenches the reaction products from about 1800°F to less than about 1200°F. The cooled gases in line 22 can be further quenched in heat exchanger 23 to about 500° - 600°F and water in the product can be separated in vessel 24 with the synthesis gas product exiting through line 25 and with the condensed water leaving through line 26.

The reverse reaction of hydrogen and carbon monoxide to re-form methane can occur in line 18 and wasteheat boiler 19 at temperatures below about 1780°F. The rate of the back reaction falls off as temperature is decreased to below about 1200°F, preferably below about 900°F when catalyzed by fine catalyst particles that have either coated or have become deposited in line 18 or in waste heat boiler 19. An attrition resistant catalyst reduces the catalyst fines generated and the consequent entrainment and carry over of these fines from the bed and into the downstream equipment. By reducing fines in the downstream equipment, the nickel loss is minimized and the back reaction to methane is minimized thereby achieving a maximum net conversion of methane in the process.

As a result of this process, unconverted methane in the product gas is less than about 8 mole %, peferably, less than about 4 mole %, based on dry gas for operation at 1800°F, 360 psia with a typical $CH_4/H_2O/_{O_2}$ feed mixture.

Because reaction conditions are quite severe and catalyst integrity is important, the support for the nickel is preferably alpha alumina, the most stable form of alumina at reaction conditions. The surface area is less than about 1 $m^2$/g of catalyst. Silica is often used to stabilize alumina but at high steam partial pressures, silica is converted into a volatile material that reduces the integrity of the catalyst particle. The support is preferably at least 95 wt.% alpha alumina, more preferably at least about 98% alpha alumina and the amount of silica is less than 0.5 wt.% and preferably less than 0.2 wt.%.

The objectives of this invention are achieved by utilizing an attrition resistant catalyst and thereby reducing the amount of fines formed during the process. While catalyst particle sizes are those than are readily fluidized and remain in the fluid bed, the preferred size range is from about 30 to 150 microns. Fines or fine particles resulting from catalyst attrition are generally less than about 20 microns in size. These fines are of a size that cyclones, even efficient cyclones (used for the recovery of catalyst particles that escape the fluidized bed), cannot efficiently capture them and return them to the fluid bed.

Catalyst particle density has been found to be a good indicator of attrition characteristics for alpha-$Al_2O_3$. As particle density increases, the rate of attrition decreases. While lower particle densities lead to better contact effectiveness (and smaller reactor volume), lower density also increases the void space in a catalyst particle and makes the particle more susceptible to attrition. In order to minimize the amount of catalyst lost through attrition, particle density should be greater than about 2.2 grams/cc, preferably greater than about 2.4 grams/cc, as measured by mercury porosimeter. Increasing particle density serves to further reduce attrition rates and thereby reduce the amount of fines formed during the process. Increasing particle density, however, also tends to increase catalyst erosivity properties and while a high particle density is preferred from an attrition point of view, consideration must also be given to the equipment in use, its life under erosive conditions, the expense of replacement or the expense of providing linings to reduce the consequences of erosion. Preferably, particle density ranges from about 2.4 to about 3.9 grams/cc, more preferably about 2.5 to 3.8 g/cc, still more preferably about 2.7 to 3.6 g/cc. Previous patents and literature references have not recognized the importance of catalyst particle density in achieving a catalyst than can operate effectively at the severe process conditions required by the process described in this invention.

The feed material to be converted is preferably a light hydrocarbon, for example, a $C_1$-$C_4$ alkane. More preferably, the feed material comprises primarily methane with a lesser amounts of $C_2$'s and $C_3$'s and trace amounts of higher alkanes. Any feed gas having a methane concentration in excess of about 80% is useful, for example, natural gas which contains about 85% methane, up to about 10% ethane, up to about 3% propane and trace amounts of $C_4$-$C_8$'s. Condensate in the gas should be removed and contaminants, such as hydrogen sulfide, are removed by known methods.

A typical feed will include, in addition to the light hydrocarbon, some carbon dioxide and nitrogen as well as some carbon monoxide, hydrogen, minor amounts of olefins and oxygenated products that are present as a result of recycling from downstream processes, e.g., the Fischer-Tropsch process. In this specification, the conversion of methane in the reaction zone is meant to include the conversion of any light hydrocarbon to synthesis gas.

The catalyst is nickel on alumina and the alumina is a dense, alpha alumina. The preparation of alpha alumina is well described in the literature, e.g., heating any alumina phase above the transition temperature of alpha alumina for a sufficient time to convert all or substantially all of the alumina to the alpha phase. Achieving alpha alumina is not, however, sufficient to provide the attrition resistant catalyst required for this process. Attrition resistance is obtained by continuing to heat the alpha alumina so that its density is at least about 2.2 g/cc. This can be accomplished by heating the alpha alumina above about 2200°F for an extended period of time. Sintering aids, e.g. Na, Mg, $SiO_2$ $Cl^-$, $PO_4$, can be added to the $Al_2O_3$ to accelerate the transformation to a high density alpha $Al_2O_3$.

The alpha alumina of adequate density is then used to support the nickel catalyst metal. Nickel may be applied to the support by known methods, e.g., impregnation by incipient wetness, where the nickel as a water soluble nickel salt, e.g., the nitrate is applied to the support. After impregnation the catalyst is dried and calcined, converting the nickel salt to the oxide. Reduction in hydrogen forms the nickel on alpha alumina catalyst.

Any amount of nickel will promote the desired conversion of methane to synthesis gas and the minimum nickel content is not important except insofar as reasonable commercial reaction rates are achieved and such rates can be achieved with a nickel content of at least about 0.5 wt.%. Because catalyst losses as fines are inherent in fluid bed catalyst systems, nickel will be lost from the system and will be available to promote the back reaction of carbon monoxide and hydrogen to methane as the synthesis gas is cooled. As the nickel content of the catalyst increases, the amount of nickel lost from the system will increase and the rate of the back reaction during the cooling step will increase. We find it desirable to maintain a net methane conversion of at least about 90%, that is, of the methane converted to synthesis gas at least about 90% remains converted after the back reaction is completed and the product gases are cooled to a temperature below that which favors the back reaction. Preferably, the net methane conversion is at least about 93%, more preferably, at least about 95% and the upper level of nickel content is selected to maintain the degree of methane conversion. Generally, nickel contents of about 5 wt.% or less, preferably 2.5 wt.% or less will be adequate to maintain the desired net methane conversion.

## Examples of Invention

### Example 1

The operation of the fluid bed synthesis gas generation process with an $Al_2O_3$ based catalyst that is not predominantly alpha-$Al_2O_3$ (such as gamma-$Al_2O_3$) can lead to major attrition because of the very severe operating conditions: for example, about 1800°F, 360 psia with a steam partial pressure of about 100 psia. The high steam partial pressure combined with the 1800°F temperature, severely attacks the non-alpha-$Al_2O_3$ phases and results in significant attrition. The table below illustrates the need for an alpha-$Al_2O_3$ catalyst base material.

| Type $Al_2O_3$ | Wt.% Attrition after Exposure to 1800°F with 100 psia Steam |
|---|---|
| Gamma | 66 |
| Alpha | 4-8 |

After the two catalysts were exposed to the severe environment, they were subjected to a standard attrition test in which nitrogen was injected into a standard test apparatus containing a given amount of catalyst. The amount of fines (< 20 microns) was measured after a one hour time period. The gamma-$Al_2O_3$ formed 8-16 times more fines than the alpha-$Al_2O_3$.

### Example 2

Poor attrition resistance of a catalyst operating in a fluid bed synthesis gas generation process can lead to a reduction in net conversion of methane over a period of time and this is illustrated in a test in which a mixture of $CH_4$, steam, and $O_2$ in the feed ratio of 1.0/0.5/0.5 were reacted in a catalytic fluid bed unit operating at 1800°F and 360 psia. Catalyst fines generated in the reactor can be lost from the bed and are deposited in the equipment lines downstream of the bed.

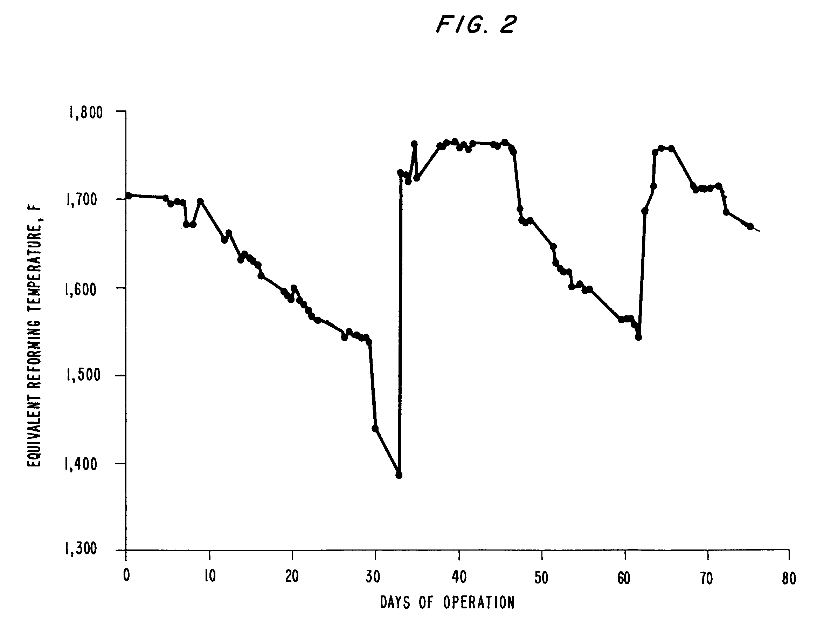

Two Ni on $Al_2O_3$ catalysts were tested. One catalyst, designated as Catalyst A, had poor attrition resistance and the other catalyst, Catalyst B, was prepared by the preferred techniques disclosed in this invention and had excellent attrition resistance. The test results from Catalyst A are shown in Figure 2. Catalyst A was a gamma alumina having a particle density of less than 2g/cc. With time, some of the gamma alumina changed to alpha alumina and particle density increased by virtue of exposure to operating conditions for considerable length of time. The results are expressed in terms of a measure in °F of the approach to steam reforming equilibrium versus time. From the plot, Catalyst A started off with a fairly close approach to equilibrium, i.e., the reactor was operating at 1800°F and the product gas composition was consistent with a steam reforming equilibrium temperature of about 1780°F. This indicated that there was a minimal amount of catalyst fines in the downstream equipment which was operating < 1800°F. As the run progressed, catalyst fines gradually accumulated in the downstream equipment and caused the steam reforming reaction to reverse and the resulting equilibrium temperature decreased to about 1500°F.

At day 36, the downstream equipment was examined and catalyst fines were found on the walls. The equipment was cleaned and the catalyst adhering to the walls of the equipment was discarded. The run was then re-started and the equilibrium temperature returned to the original value because there was no longer any catalyst on the walls of the downstream equipment to promote the back reaction. As the plot shows, the equilibrium temperature gradually decreased again as the fines continued to coat the downstream equipment. In each case, the reduction in equilibrium represents a net decrease in the conversion of $CH_4$. At Day 70, the downstream equipment was cleaned again and the same result was achieved. These data show that operation with a catalyst that undergoes substantial attrition in a fluid bed synthesis gas generation process leads to a substantial net loss in $CH_4$ conversion.

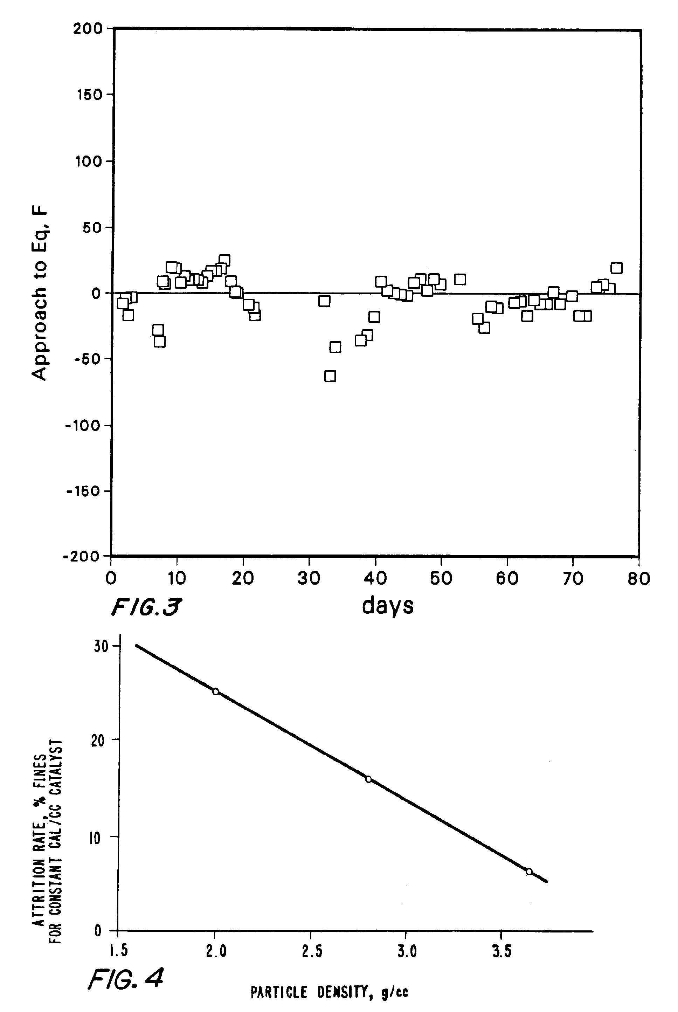

Catalyst B, prepared by the preferred procedures disclosed in this invention, was tested in a similar run. The results of this test are shown in Figure 3. In this case, negligible catalyst fines formed during the run and the equilibrium steam reforming temperatures remained essentially equal to the reactor temperature. Methane conversion as syntheses gas was maintained in excess of 90%. Catalyst B contained primarily alpha-$Al_2O_3$ but had a particle density of 3.6 g/cc. Examination of the downstream equipment showed virtually no adherent catalyst fines on equipment walls.

These data demonstrate that poor attrition resistance can have a significant adverse affect on a fluid bed process will beyond catalyst make-up requirement. The decrease in methane conversion can have a major economic debit particularly for a process scheme in which the synthesis gas is further reacted in the Fischer-Tropsch process to produce higher molecular weight hydrocarbons. By operating with a catalyst having a particle density in the preferred range of 2.5-3.6 g/cc, the amount and nature of the catalyst fines is such that there is negligible accumulation on the walls of the downstream equipment and the undesired reverse reaction of the synthesis gas to reform $CH_4$ can be minimized substantially.

Example 3

The primary method for producing an $Al_2O_3$ catalyst material that will have good attrition resistance under severe operating conditions requires converting the $Al_2O_3$ into its alpha phase by extensive heating beyond the point of initial formation of alpha-$Al_2O_3$ to a point at which the particle density has increased into the region of 2.5-3 g/cc. This additional heating causes the individual crystals in the alpha-$Al_2O_3$ particles to achieve further growth such that the bonding of the small crystallites becomes enhanced and improves the attrition resistance. During this heating, the pore structure decreases and provides additional strength. The attrition characteristics for alpha-$Al_2O_3$ at different particle densities are illustrated in Figure 4. Catalyst B in Example 2 was made by this process and had a particle density of 3.6 g/cc. The attrition test used is conducted by operating a fluid bed at a given inlet gas velocity across a distributor with the same energy input per unit volume of catalyst in all tests. The catalyst is withdrawn from the bed at the end of the test and a particle size analysis is performed. The wt.% of particles less than 20 microns is determined and this is the value plotted. In each case, the starting material contained no particles < 20 microns.

Example 4

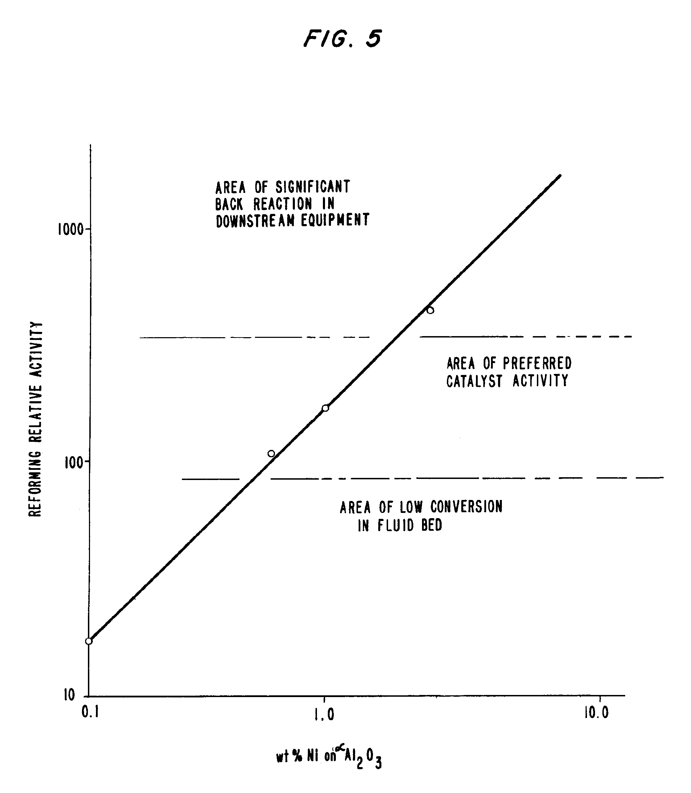

The back reaction is limited also by the amount of Ni on the alpha-$Al_2O_3$ base material. A certain amount of catalytic activity is required in the fluid bed reactor, but at some point the overall reaction becomes limited by the mass transfer of reactants from the bubble phase in the reactor to the emulsion phase where the catalyst is present or reaches thermodynamic equilibrium. Any Ni that is impregnated on the catalyst beyond either the mass transfer limitation or beyond the point of achieving equilibrium does not improve operations of the fluid bed reactor, but instead actually causes process debits because any fines that enter the reactor downstream equipment cause back reactions to occur at a high reaction rate. A high Ni content in the catalyst fines will case large increased in the reaction rate in the downstream equipment, thereby reducing the overall net conversion or $CH_4$ in the process. In Figure 5, the preferred Ni content is shown to be in the region of 0.5 wt.% to almost 2.5 wt.%. Below 0.5 wt.% Ni on the preferred alpha $Al_2O_3$ leads to somewhat uneconomical fluid bed heights to achieve desired conversion. Ni contents above 2.5 wt.% lead to significant reverse reactions in the downstream equipment.

NOTES

- Temperature in °F is converted to equivalent °C by substracting 32 and dividing by 1.8.
- Pressure (absolute) in psia is converted to kPa by multiplying by 6.895.
- 1 micron = 1 $\mu$m.
- 1cc = 1 cm³.

**Claims**

1. A method for converting a light hydrocarbon feed primarily containing methane to synthesis gas which comprises:
   (a) reacting in a fluid bed reaction zone (12) the feed (10) with steam (10) and oxygen (11) at elevated temperature in the presence of a catalyst comprising nickel on a support containing primarily alpha-alumina having a particle density of at least 2.2g/cm³ to form a synthesis gas product (13) comprised of carbon monoxide, hydrogen, and containing entrained catalyst particles;
   (b) cooling the synthesis gas product in a second zone (19) to a temperature below that which favors the formation of methane from carbon monoxide and hydrogen in the presence of said catalyst; and
   (c) preserving at least about 90% of the feed converted as synthesis gas (25).
2. The process of claim 1 wherein the temperature in the reaction zone is at least 1700°F (926.7°C).
3. The process of claim 1 or claim 2 wherein the product gas is cooled to less than about 1200°F (648.9°C).
4. The process of any one of claims 1 to 3 wherein the product gas is cooled to a temperature of less than about 900°F (482.2°C).
5. The process of any one of claims 1 to 4 wherein the nickel content of the catalyst is less than about 5 wt.%.
6. The process of any one of claims 1 to 5 wherein the catalyst particle density is greater than about 2.5 g/cm³.
7. The process of any one of claims 1 to 6 wherein the alumina of the catalyst is at least about 98 wt.% alpha-alumina.

**Patentansprüche**

1. Verfahren zur Umwandlung eines leichten Kohlenwasserstoffeinsatzmaterials, das hauptsächlich Methan enthält, zu Synthesegas, bestehend aus:
   (a) der Umsetzung des Einsatzmaterials (10) mit Dampf (10) und Sauerstoff (11) bei erhöhter Temperatur in einer Fließbett-Reaktionszone in Gegenwart eines Katalysators, der Nickel auf einem Träger, der hauptsächlich $\alpha$-Aluminiumoxid mit einer Teilchendichte von mindestens 2,2 g/cm³ enthält, umfaßt, unter Bildung eines Synthesegasprodukts (13), das Kohlenmonoxid und Wasserstoff umfaßt und mitgerissene Katalysatorteilchen enthält;
   (b) dem Abkühlen des Synthesegasprodukts in einer zweiten Zone (19) auf eine Temperatur unterhalb derjenigen, die die Bildung von Methan aus Kohlenmonoxid und Wasserstoff in Gegenwart des Katalysators begünstigt; und
   (c) dem Gewinnen von mindestens etwa 90% des Einsatzmaterials, das in Synthesegas umgewandelt ist.
2. Verfahren nach Anspruch 1, bei dem die Temperatur in der Reaktionszone mindestens 1700°F (926,7°C) ist.
3. Verfahren nach Anspruch 1 oder Anspruch 2, bei dem das Produktgas auf weniger als etwa 1200°F (648,9°C) abgekühlt wird.
4. Verfahren nach einem der Ansprüche 1 bis 3, bei dem das Produktgas auf eine Temperatur von weniger als etwa 900°F (482,2°C) abgekühlt wird.
5. Verfahren nach einem der Ansprüche 1 bis 4, bei dem der Nikkelgehalt des Katalysators weniger als etwa 5 Gew.% beträgt.
6. Verfahren nach einem der Ansprüche 1 bis 5, bei dem die Katalysatorteilchendichte größer als etwa 2,4 g/cm³ ist.
7. Verfahren nach einem der Ansprüche 1 bis 6, bei dem das Aluminiumoxid des Katalysators mindestens zu etwa 98 Gew. % α-Aluminiumoxid ist.

**Revendications**

1. Procédé de conversion d'une alimentation en hydrocarbures légers, contenant essentiellement du méthane en gaz de synthèse qui comprend les étapes de:

(a) mise en réaction dans une zone réactionnelle à lit fluidisé (12) de l'alimentation (10) avec de la vapeur d'eau (10) et de l'oxygène (11) à température élevée en présence d'un catalyseur comprenant du nickel sur un support contenant principalement de l'alumine-alpha ayant une densité de particule d'au moins 2,2 g/cm³ pour former un produit de gaz de synthèse (13) comprenant du monoxyde de carbone, de l'hydrogène, et contenant des particules de catalyseur entraînées;

(b) refroidissement du produit de gaz de synthèse dans une seconde zone (19) à une température inférieure à celle qui favorise la formation de méthane à partir de monoxyde de carbone et d'hydrogène en présence dudit catalyseur; et

(c) préservation d'au moins environ 90% de l'alimentation convertie comme gaz de synthèse (25).

2. Procédé selon la revendication 1, dans lequel la température dans la zone de réaction est d'au moins 926,7°C (1 700°F).

3. Procédé selon la revendication 1 ou 2, dans lequel le gaz produit est refroidi à une température inférieure à environ 648,9°C (1 200°F).

4. Procédé selon l'une quelconque des revendications 1 à 3, dans lequel le gaz produit est refroidi à une température inférieure à environ 482,2°C (900°F).

5. Procédé selon l'une quelconque des revendications 1 à 4, dans lequel la teneur en nickel du catalyseur est inférieure à environ 5% en poids.

6. Procédé selon l'une quelconque des revendications 1 à 5, dans lequel la densité de particule de catalyseur est supérieure à environ 2,4 g/cm³.

7. Procédé selon l'une quelconque des revendications 1 à 6, dans lequel l'alumine du catalyseur est, pour au moins environ 98% en poids,de l'alumine-alpha.

EP 0 335 668 B1

# F/G. /

REACTION ZONE ← | → COOLING ZONE

SYNTHESIS GAS 25

CH₄/H₂O

O₂

H₂O 26

9

FIG. 2

EP 0 335 668 B1

FIG.3

FIG. 4

# FIG. 5

wt % NI on $\propto Al_2O_3$